# EUROPEAN PATENT APPLICATION

(11) **EP 3 138 618 A1**
(43) Date of publication of application: **08.03.2017**
(21) Application number: 16187653.7
(22) Date of filing: 07.09.2016
(51) Int. Cl.: B01D 21/00, B01D 21/24, B03B 9/06

(54) **SETTLEMENT TANK**

(30) Priority: 07.09.2015 GB 201515811
(71) Applicant: Cross Plant Hire Limited, Bury, Lancashire BL0 0ED (GB)
(72) Inventor: PLATT, Robin, Bury, Lancashire BL0 0ED (GB)
(74) Representative: Appleyard Lees IP LLP

(57) **Abstract**

A settlement tank 100 for clarifying, e.g. wastewater, is provided. The settlement tank 100 comprises a tank 200 and a lamella assembly 300. The tank 200 and the lamella assembly 300 are arrangeable in a first configuration in which the lamella assembly is arranged inside of the tank and in a second configuration in which a part of the lamella assembly is arranged outside of the tank 200. In this way, maintenance e.g. cleaning of the tank (200) and/or lamella assembly 300 may be facilitated.

## Description

### Field of the Invention

The present invention relates to settlement tanks, and to related methods of use of settlement tanks, particularly lamella settlement tanks for use in the recovery of solids from water.

### Background to the Invention

Settling (also known as sedimentation) is a process by which particulates settle in a liquid and form a sediment. In gravity settling, the suspended particles tend to fall to the bottom of a vessel, forming a sediment slurry. Settling is an operation in applications such as mining and wastewater treatment. For example, suspended solids in groundwater, industrial process water, backwash from sand filters or wastewater from excavations may be removed by settling so that cleaned water may be recycled or disposed.

Typically, settling basins are settlement tanks or ponds for removing entrained solids by sedimentation. In contrast, clarifiers are settling tanks that include mechanical means for continuous removal of solids being deposited by sedimentation. While sludge collects at the bottom of the tanks, floating solids may collect on the surface as scum. Chemical coagulation and/or flocculation may also be used to improve an efficiency of settling, including of smaller particles.

A lamella clarifier, for example an inclined-plate clarifier or an inclined-tube clarifier, is a type of settlement tank typically employed in industrial water treatment. Unlike conventional clarifiers, lamella clarifiers include a series of inclined plates or tubes that provide a large effective settling area for a given tank footprint. Such lamella clarifiers may typically have tube or plate spacings of 50 mm, tube or plate lengths of 1 - 2 m, tube or plate pitches between 45° and 70° to allow for self-cleaning while lower pitches require backwash, allowing typical loading rates of 5 to 10 m³ per hour. An inlet water feed is stilled upon entry into the clarifier, typically entering from a top of the clarifier vessel and flowing down a feed channel underneath the inclined lamella. The water then flows up inside the clarifier between the inclined plates or tubes. During this flow, solids may settle onto the lamella and may eventually move to a bottom of the vessel, where a hopper or funnel may collect the settled particles as sludge. The sludge may be continuously or intermittently discharged. The clarified or cleaned water stream may exit a top of the tank by a weir. The cleaned liquid may subsequently pass to a membrane filter.

Lamella clarifiers are hence preferred where site footprint may be a constraint, for example, at construction sites, industrial facilities or agricultural yards. These standalone clarifiers may be installed both indoors and outdoors while their smaller footprints allow them to be moved more readily and/or installed temporarily, for example at a construction site. These clarifiers have a limited number of mechanical and/or moving parts and minimized energy requirements, requiring only an influent pump, thereby reducing a failure risk while enhancing safety.

However, pre-treatment may be required to remove materials that could decrease separation efficiency, such as fines, grit or oil & grease. Further, typical designs of lamella clarifiers create turbulence as influent water flows towards the inclined plates or tubes, resulting in re-suspension and/or dilution of sludge. Additionally, frequent maintenance may be required to maintain settling efficiency. Particularly, poorly maintained lamella may result in uneven flow distribution while solids accumulation and/or sludge flowing down the inclined lamella increases back-pressure. Hence, frequent cleaning of the lamella may be required but this may halt operation of the clarifier for protracted periods and hence water treatment. In addition, closely-packed plates or tubes may make cleaning difficult. Furthermore, the sludge may become gluey and viscous if left for an extended period of time, thereby causing difficulties in removal. This type of sludge promotes anaerobic conditions, suitable for microbial or fungal growth. This can also cause re-suspension of particles by gas bubble formation and release of dissolved nutrients, reducing the effectiveness of the clarifier. Alternatively, solids such as clays, cement or construction residue may harden upon drying, thereby also causing difficulties in removal. Particularly, when for example the sludge is intermittently discharged from standalone clarifiers, operation of the lamella clarifier must again be halted to remove the sludge, in which removal may be made more difficult as a result of the sludge becoming more viscous and/or hardening. Such problems may be exacerbated as a result of, for example, leaving clarifiers to dry during out-of-operation periods or decommissioning prior to movement of standalone clarifiers, especially if there is inadequate cleaning and/or removal of sludge prior. In addition, collection hoppers or funnels increase a size and/or height of the lamella clarifiers, thereby restricting transportation and/or access to sites.

Example embodiments of the present invention aim to address at least one of the issues identified above, or related issues.

### Summary of the Invention

According to the present invention there is provided an apparatus and method as set forth in the appended claims. Other features of the invention will be apparent from the dependent claims, and the description which follows.

According to a first aspect of the invention, there is provided a settlement tank comprising a tank and a lamella assembly, wherein the tank and the lamella assembly are arrangeable in:
a first configuration wherein the lamella assembly is arranged inside of the tank; and
a second configuration wherein a part of the lamella assembly is arranged outside of the tank.

In this way, the lamella assembly may be arranged inside the tank during normal operation (e.g. clarifying water) and removed from the tank for maintenance (e.g. cleaning or removing deposits).

In an example embodiment, the settlement tank comprises a coupling member, wherein the tank and the lamella assembly are arranged to be coupled by the coupling member and wherein the settlement tank is arranged to move from the first configuration to the second configuration according to a movement defined by the coupling member. In this way, the coupling member may determine the first and/or second configurations and/or movement between the first and second configurations.

In an example embodiment, the coupling member comprises a pivot (e.g. a rotating joint, a hinge, a chain) whereby the movement from the first configuration to the second configuration comprises a rotation. In this way, the lamella assembly may be arranged to rotate about the coupling member, relative to the tank. In an example embodiment, the coupling member comprises a linear coupling (e.g. a sliding joint, an axial coupling) whereby the movement from the first configuration to the second configuration comprises a translation. In this way, the lamella assembly may be arranged to translate along the coupling member, relative to the tank. In this way, the part of the lamella assembly may be arranged outside of the tank. Conversely, the part of the lamella assembly may be arranged within the tank.

In an example embodiment, the coupling member is removable i.e. the tank and the lamella assembly may be uncoupled. In an example embodiment, the coupling member is replaceable i.e. the tank and the lamella assembly may be recoupled. In this way, the lamella assembly may be, for example, lifted into the tank and coupled to the tank e.g. during manufacture, after maintenance. In this way, the lamella assembly may be, for example, uncoupled from the tank and lifted out of the tank e.g. for maintenance, for transport.

In an example embodiment, the settlement tank comprises a staying member arrangeable to restrict a movement of the settlement tank from the second configuration to the first configuration. For example, the settlement tank may comprise a strut or a chain arrangeable to tend to oppose variable spacing of the tank and the lamella assembly. In this way, a configuration (e.g. the first configuration, the second configuration) of the tank and the lamella assembly may be maintained i.e. fixed or held. In an example embodiment, the stay is arrangeable to couple the tank and the lamella assembly in the configuration (e.g. the first configuration, the second configuration). For example, the stay may comprise a locking stay or strut that may be releasably coupled to the tank and the lamella assembly. Alternatively, the stay may comprise means of limiting a motion of the tank and/or the lamella assembly e.g. a brake, a locking clamp.

In an example embodiment, the tank is arranged to receive the lamella assembly. In an example embodiment, the tank is arranged to receive the lamella assembly in the first configuration and/or the second configuration. In an example embodiment, the tank is arranged to receive the lamella assembly within the tank e.g. wholly within, partly within. In an example embodiment, the tank and/or the lamella assembly are dimensioned such that the lamella assembly may be contained partly or wholly within the tank. In an example embodiment, a side of the tank e.g. an upper side is open and free from obstructions such that the lamella assembly may be placed in and/or removed from the tank through the open side of the tank and such that the part of the lamella assembly is arrangeable outside of the tank through the open side of the tank.

In an example embodiment, the settlement tank comprises a roll member arranged such that the settlement tank may be arranged to roll on or about the roll member. In one example embodiment, the settlement tank comprises a roll member arranged whereby the settlement tank is arranged to roll on or about the roll member from the first configuration to the second configuration. In one example embodiment, the roll member is arranged such that a rotational axis of the roll member is parallel to a rotational axis of the coupling member, wherein the coupling member comprises a pivot. In one example embodiment, the roll member is arranged such that a rotational axis of the roll member is perpendicular to a linear axis of the coupling member, wherein the coupling member comprises a linear coupling. In one example embodiment, the coupling member is arranged proximal an end of the settlement tank and the roll member is arranged proximal an opposed end of the settlement tank. In one example embodiment, the coupling member is arranged proximal an upper part of an end of the settlement tank and the roll member is arranged proximal a lower part of an opposed end of the settlement tank. For example, the roll member may comprise an edge. Alternatively and/or additionally, the roll member may comprise a convex roll member coupled to the settlement tank and external to the settlement tank e.g. a fabrication, a rolled structural section, a rolled I-beam, a rolled hollow section, a wheel.

In an example embodiment, the settlement tank comprises a protection member, arranged to protect a tank inlet and/or tank outlet e.g. from damage. In an example embodiment, a roll member comprises a protection member. In this way, the roll member may shield the tank outlet, for example, during rolling of the settlement tank on the roll member.

In an example embodiment, the settlement tank comprises a lifting point arranged to receive, for example, a lifting means, a hook, a shackle, a grab, a chain, a rope, a fork, a bucket. In an example embodiment, the lifting point may comprise, for example, an eye, a lug. In this way, a part of the settlement tank may be lifted and/or lowered. In this way, the settlement tank may be lifted and/or lowered. In one example embodiment, the lifting point is arranged proximal the coupling member.

In one example embodiment, the lifting point is arranged proximal an end of the settlement tank and the roll member is arranged proximal an opposed end of the settlement tank. In this way, lifting the settlement tank by the lifting point may tend to roll the settlement tank on or about the roll member.

In one example embodiment, the coupling member and the lifting point are arranged proximal an upper part of an end of the settlement tank and the roll member is arranged proximal a lower part of an opposed end of the settlement tank, wherein the roll member is arranged such that a rotational axis of the roll member is parallel to a rotational axis of the coupling member and wherein the coupling member comprises a pivot. In this way, lifting the settlement tank by the lifting point may tend to roll the settlement tank on or about the roll member whereby the lamella assembly may tend to rotate relative to the tank about the coupling member due to a biasing force (e.g. gravity and/or a biasing member) whereby the part of the lamella assembly may be arranged outside of the tank. In this way, access inside the tank and/or to the lamella assembly may be enabled, thereby facilitating, for example, cleaning, maintenance or removal of deposits. In this way, lowering the settlement tank by the lifting point may tend to roll the settlement tank on or about the roll member whereby the lamella assembly may tend to rotate relative to the tank about the coupling member due to a biasing force (e.g. gravity and/or a biasing member) whereby the part of the lamella assembly may be arranged again inside of the tank.

In one example embodiment, the coupling member and the lifting point are arranged proximal an upper part of an end of the settlement tank and the roll member is arranged proximal a lower part of an opposed end of the settlement tank, wherein the roll member is arranged such that a rotational axis of the roll member is perpendicular to a linear axis of the coupling member and wherein the coupling member comprises a linear coupling. In this way, lifting the settlement tank by the lifting point may tend to roll the settlement tank on or about the roll member whereby the lamella assembly may tend to translate relative to the tank along the coupling member due to a biasing force (e.g. gravity and/or a biasing member) whereby the part of the lamella assembly may be arranged outside of the tank. In this way, access inside the tank and/or to the lamella assembly may be enabled, thereby facilitating, for example, cleaning, maintenance or removal of deposits. In this way, lowering the settlement tank by the lifting point may tend to roll the settlement tank on or about the roll member whereby the lamella assembly may tend to translate relative to the tank along the coupling member due to a biasing force (e.g. gravity and/or a biasing member) whereby the part of the lamella assembly may be arranged inside the tank.

In an example embodiment, the settlement tank comprises a biasing member (e.g. a spring, a compressive spring, a tensile spring, a gas spring, a gas strut) arranged to bias the settlement tank towards the first configuration and/or the second configuration. In this way, a relative movement between the lamella assembly and the tank may be biased. For example, the lamella assembly may be biased by the biasing member so as to tend to arrange the part of the lamella assembly outside of the tank i.e. towards the second configuration. Alternatively, the lamella assembly may be biased by the biasing member so as to tend to arrange the part of the lamella assembly inside the tank i.e. towards the first configuration. In an example embodiment, the settlement tank comprises a first biasing member arranged to bias the settlement tank towards the first configuration when the settlement tank is arranged relatively towards the first configuration and a second biasing member arranged to bias the settlement tank towards the second configuration when the settlement tank is arranged relatively towards the second configuration. In this way, the settlement tank a relative stability of the settlement tank in either configuration is increased.

In an example embodiment, the lamella assembly comprises a lamella. In an example embodiment, the lamella assembly comprises a plurality of lamellae. In an example embodiment, the lamella comprises a plate. In an example embodiment, the lamella comprises a tube.

In an example embodiment, the lamella assembly comprises a plate. In an example embodiment, the lamella assembly comprises a plurality of plates. In an example embodiment, the lamella assembly comprises an inclined plate. In an example embodiment, the lamella assembly comprises a plurality of inclined plates.

In an example embodiment, the lamella assembly comprises a tube (also known as a tube settler). In an example embodiment, the lamella assembly comprises a plurality of tubes. In an example embodiment, the lamella assembly comprises an inclined tube. In an example embodiment, the lamella assembly comprises a plurality of inclined tubes. For example, the lamella assembly may comprise a GEA 2H TUBEdek® Lamella Clarifier.

In an example embodiment, the lamella assembly comprises a material selected from a group comprising: a metal, iron, aluminium, an alloy, a steel, a stainless steel, an aluminium alloy, a polymer, polypropylene and polyvinylchloride (PVC).

In an example embodiment, the lamella assembly comprises a plate, wherein the plate comprises a material selected from a group comprising: a metal, iron, aluminium, an alloy, a steel, a stainless steel, an aluminium alloy, a polymer, polypropylene and polyvinylchloride (PVC).

In an example embodiment, the lamella assembly comprises a tube, wherein the tube comprises a material selected from a group comprising: a metal, iron, aluminium, an alloy, a steel, a stainless steel, an aluminium alloy, a polymer, polypropylene and polyvinylchloride (PVC).

In an example embodiment, the lamella assembly comprises an inclined plate wherein the inclined plate is inclined at a pitch angle of 45° to 70° e.g. 45°, 50°, 55°, 60°, 65° or 70°.

In an example embodiment, the lamella assembly comprises a plurality of inclined plates wherein the plurality of inclined plates is inclined at a pitch angle of 45° to 70° e.g. 45°, 50°, 55°, 60°, 65° or 70°. Decreasing the pitch angle increases a total settling area; however, below a critical pitch angle, settled solids may not slide down the inclined plate, thereby requiring cleaning of the settlement tank. In an example embodiment, the lamella assembly comprises the plurality of inclined plates wherein the plurality of inclined plates is inclined at a same pitch angle i.e. the pitch angle of adjacent plates may be the same. In an example embodiment, the lamella assembly comprises the plurality of inclined plates wherein the plurality of inclined plates is inclined at different pitch angle i.e. the pitch angle of adjacent plates may be different. In an example embodiment, the pitch angle is predetermined i.e. the pitch angle is fixed by manufacture, for example. In an example embodiment, the pitch angle of an inclined plate and/or of the lamella assembly is adjustable i.e. the pitch angle may be varied, for example, according to a flow of fluid and/or an amount and/or type of suspended solid and/or cleaning requirement. For example, the pitch angle of the lamella assembly may be changed by raising or lowering an end of the lamella assembly with respect to the other end of the lamella assembly.

In an example embodiment, the lamella assembly comprises a plurality of inclined plates wherein an inclined plate of the plurality of inclined plates is arranged parallel to an adjacent inclined plate of the plurality of inclined plates. In an example embodiment, the lamella assembly comprises a plurality of inclined plates wherein an inclined plate of the plurality of inclined plates is arranged at a spacing of 30 mm to 120 mm e.g. 30 mm, 40 mm, 50 mm, 60 mm, 70 mm, 80 mm, 90 mm, 100 mm, 110 mm or 120 mm to an adjacent inclined plate of the plurality of inclined plates. Decreasing the spacing increases a total settling area; however, below a critical spacing, turbulence and/or solid resuspension may occur, thereby reducing an efficiency of the settlement tank. In an example embodiment, the lamella assembly comprises the plurality of inclined plates wherein a spacing between consecutive inclined plates is the same i.e. regularly-spaced inclined plates. In an example embodiment, the lamella assembly comprises the plurality of inclined plates wherein a spacing between consecutive inclined plates is different i.e. varyingly-spaced inclined plates. In an example embodiment, the spacing is predetermined i.e. the spacing is fixed during manufacture, for example. In an example embodiment, the spacing is adjustable i.e. the spacing may be varied, for example, according to a flow of fluid and/or an amount and/or type of suspended solid and/or cleaning requirement.

In an example embodiment, the lamella assembly is arranged to in use receive a fluid, for example water. In an example embodiment, the lamella assembly is arranged to in use receive a fluid, wherein the fluid comprises a solid, for example water comprising a suspended solid or wastewater.

In an example embodiment, the lamella assembly is arrangeable to be in fluid communication with the tank. In an example embodiment, the lamella assembly is arranged in use to be in fluid communication with the tank.

In an example embodiment, the lamella assembly comprises a lamella frame arranged to receive a lamella. In an example embodiment, the lamella assembly comprises a lamella frame and a lamella, wherein the lamella is coupled to the lamella frame. In an example embodiment, the lamella assembly comprises a lamella tank arranged to receive a lamella. In an example embodiment, the lamella assembly comprises a lamella tank and a lamella, wherein the lamella is coupled to the lamella tank.

In an example embodiment, the lamella assembly comprises a lamella wall portion, for example a side lamella wall portion. In an example embodiment, the lamella assembly comprises a plurality of lamella wall portions, for example a plurality of side lamella wall portions.

In an example embodiment, the bottom lamella wall portion comprises no openings in, or passageways defined there-through. In an example embodiment, the bottom lamella wall portion comprises one opening in, or passageway defined there-through. In an example embodiment, the plurality of lamella wall portions are arranged with one another to form the tank comprising no openings in, or passageways defined through the lamella wall portions. In an example embodiment, the plurality of lamella wall portions are arranged with one another to form the tank comprising no openings in, or passageways defined through the lamella wall portions at a level below the operating surface of fluid contained in the lamella assembly in use. In an example embodiment, the plurality of lamella wall portions comprise one opening therein, or passageway defined there-through. In an example embodiment, the opening or passageway is closeable, for example the opening or passageway comprises a plughole and plug. In an example embodiment, the plurality of lamella wall portions comprise a plurality of openings therein, or passageways defined there-through, as described above. In an example embodiment, the lamella assembly comprises a single internal surface defined by the lamella wall portions. In an example embodiment, the single internal surface is generally concave, to in use receive a fluid. In an example embodiment, the internal surface comprises only internal corners.

In an example embodiment, the tank comprises a planar lamella wall portion. In an example embodiment, the tank comprises a non-planar lamella wall portion e.g. a curved lamella wall portion. In an example embodiment, the tank comprises a bottom lamella wall portion. In an example embodiment, the tank comprises a side lamella wall portion. In an example embodiment, the tank comprises a plurality of side lamella wall portions, including two or more side lamella wall portions arranged opposite one another. In an example embodiment the tank comprises two side lamella wall portions, for example two side lamella wall portions that are arranged opposite one another.

In an example embodiment, the tank comprises a plurality of side lamella wall portions arranged to define a settlement region of the tank there-between. In an example embodiment, the tank comprises a plurality of side lamella wall portions arranged to define a settlement region between opposed side lamella walls, for example between one, two or three pairs of opposed side lamella walls. In an example embodiment, the side lamella wall regions are arranged to provide a symmetrical tank form.

In an example embodiment, the settlement tank is arranged to in use receive a fluid, for example water. In an example embodiment, the settlement tank is arranged to in use receive a fluid, wherein the fluid comprises a solid, for example water comprising a suspended solid or wastewater.

In an example embodiment, the tank is arranged to in use receive a fluid, for example water. In an example embodiment, the tank is arranged to in use receive a fluid, wherein the fluid comprises a solid, for example water comprising a suspended solid or wastewater.

In an example embodiment, the tank comprises a plurality of wall portions, for example a bottom wall portion and one or more side walls portions. In an example embodiment, the bottom wall portion of the tank comprises no openings in, or passageways defined there-through. In an example embodiment, the bottom wall portion comprises one opening in, or passageway defined there-through. In an example embodiment, the opening or passageway is closeable, for example the opening or passageway comprises a plughole and plug. In an example embodiment, the plurality of wall portions are arranged with one another to form the tank comprising no openings in, or passageways defined through the wall portions. In an example embodiment, the plurality of wall portions are arranged with one another to form the tank comprising no openings in, or passageways defined through the wall portions at a level below the operating surface of fluid contained in the tank in use. In an example embodiment, the plurality of wall portions comprise one opening therein, or passageway defined there-through. In an example embodiment, the opening or passageway is closeable, for example the opening or passageway comprises a plughole and plug. In an example embodiment, the plurality of wall portions comprise a plurality of openings therein, or passageways defined there-through, as described above. In an example embodiment, the tank comprises a single internal surface defined by the wall portions. In an example embodiment, the single internal surface is generally concave, to in use receive a fluid. In an example embodiment, the internal surface comprises only internal corners.

In an example embodiment, the tank comprises a planar wall portion. In an example embodiment, the tank comprises a non-planar wall portion e.g. a curved wall portion. In an example embodiment, the tank comprises a bottom wall portion. In an example embodiment, the tank comprises a side wall portion. In an example embodiment, the tank comprises a plurality of side wall portions, including two or more side wall portions arranged opposite one another. In an example embodiment the tank comprises two side wall portions, for example two side wall portions that are arranged opposite one another.

In an example embodiment, the tank comprises a plurality of side wall portions arranged to define a settlement region of the tank there-between. In an example embodiment, the tank comprises a plurality of side wall portions arranged to define a settlement region between opposed side walls, for example between one, two or three pairs of opposed side walls. In an example embodiment, the side wall regions are arranged to provide a symmetrical tank form.

In an example embodiment, the settlement tank comprises an inlet. In an example embodiment, the settlement tank comprises an outlet. In an example embodiment, the settlement tank comprises a plurality of inlets. In an example embodiment, the settlement tank comprises a plurality of outlets.

In an example embodiment, the tank comprises a tank inlet. In an example embodiment, the tank comprises a tank outlet. In an example embodiment, the tank inlet is arranged to receive a conduit e.g. a pipe, a hose. In an example embodiment, the tank comprises a tank outlet. In an example embodiment, the tank outlet is arranged to receive a conduit e.g. a pipe, a hose. In an example embodiment, the tank inlet comprises a coupling wherein the coupling is arranged to receive a conduit e.g. a fluid connection, a pipe connection, a hose connection, a flanged connection, a Bauer coupling. In an example embodiment, the tank outlet comprises a coupling wherein the coupling is arranged to receive a conduit e.g. a fluid connection, a pipe connection, a hose connection, a flanged connection, a Bauer coupling.

In an example embodiment, the lamella assembly comprises a lamella assembly inlet. In an example embodiment, the lamella assembly comprises a lamella assembly outlet. In an example embodiment, the lamella assembly is in fluid communication with the lamella assembly inlet. In an example embodiment, the lamella assembly is in fluid communication with the lamella assembly outlet.

In an example embodiment, the tank inlet is arrangeable to be in fluid communication with the lamella assembly inlet. In an example embodiment, the tank outlet is arrangeable to be in fluid communication with the lamella assembly outlet. In an example embodiment, the tank inlet is arranged in use to be in fluid communication with the lamella assembly inlet. In an example embodiment, the tank outlet is arranged in use to be in fluid communication with the lamella assembly outlet. In an example embodiment, the tank inlet is arranged to receive the lamella assembly inlet. In an example embodiment, the lamella assembly inlet is arranged to receive the tank inlet. In an example embodiment, the tank outlet is arranged to receive the lamella assembly outlet. In an example embodiment, the lamella assembly outlet is arranged to receive the tank outlet. In an example embodiment, the tank inlet is arranged to in use communicatively couple with the lamella assembly inlet. In an example embodiment, the tank outlet is arranged to in use communicatively couple with the lamella assembly outlet.

In an example embodiment, the tank comprises a plurality of tank inlets as described above. In an example embodiment, the tank comprises a plurality of tank outlets as described above. In an example embodiment, the lamella assembly comprises a plurality of lamella assembly inlets as described above. In an example embodiment, the lamella assembly comprises a plurality of lamella assembly outlets as described above.

In an example embodiment, a wall portion of the lamella assembly is arrangeable in use within the tank proximal to and parallel with a wall portion of the tank. For example, a side wall portion of the lamella assembly is arrangeable in use within the tank proximal to and parallel with a side wall portion of the tank. For example, a front wall portion of the lamella assembly is arrangeable in use within the tank proximal to and parallel with a front wall portion of the tank. In an example embodiment, a side wall portion of the lamella assembly is arrangeable in use within the tank proximal to, parallel with and relatively more closely spaced (e.g. less than 2 mm, 2 mm, 5, mm, 10 mm, 20 mm, 50 mm, more than 50 mm) to a side wall portion of the tank. In this way, a flow of water between the side wall portion of the lamella assembly and the side wall portion of the tank is minimized. For example, a lower side of the lamella assembly is arrangeable in use within the tank proximal to and parallel with a bottom wall portion of the tank. In an example embodiment, a lower side of the lamella assembly is arrangeable in use within the tank proximal to, parallel with and relatively less closely spaced (e.g. less than 20 mm, 20 mm, 50 mm, 100 mm, 200 mm, more than 200 mm) to a bottom wall portion of the tank. In this way, a flow of water between the lower side of the lamella assembly and the bottom wall portion of the tank may be maintained while sludge, for example, accumulates on the bottom wall portion of the tank. In an example embodiment, the settlement tank comprises a spacer arranged to control a spacing of the lamella assembly and the tank. For example, the lamella assembly and/or the tank may comprise a skid arranged to space a side wall portion of the lamella assembly and a side wall portion of the tank. In this way, such spacing may also be maintained independently of the configuration of the settlement tank. For example, the lamella assembly and/or the tank may comprise a stop arranged to space a lower side of the lamella assembly and a bottom wall portion of the tank. In this way, such a stop may limit or define the first arrangement of the lamella assembly and the tank.

In an example embodiment, an upper side of the lamella assembly is arrangeable in use within the tank below an operating surface of water in the settlement tank. In this way, lamella plates of the lamella assembly may be wholly submerged in use below the operating surface of water in the settlement tank. In an example embodiment, an upper side of the lamella assembly is arrangeable in use within the tank above an operating surface of water in the settlement tank. In this way, lamella plates of the lamella assembly may be partly submerged in use below the operating surface of water in the settlement tank.

In an example embodiment, the settlement tank comprises a lifting point e.g. a lug, an eye, a hook, a shackle arranged to couple with a lifting means e.g. a crane, a hoist. In an example embodiment, the settlement tank comprises a plurality of such lifting points. For example, the settlement tank may comprise a four lifting lugs arranged to receive a set of chains or ropes or straps. In this way, the settlement tank may be, for example, loaded onto a vehicle, unloaded from a vehicle, repositioned on site.

In an example embodiment, the settlement tank comprises a forklift pocket arranged to receive a forklift fork. In an example embodiment, the settlement tank comprises a plurality of such forklift pockets. For example, the settlement tank may comprise a pair of forklift pockets arranged to receive a pair of forklift forks of a forklift. In this way, the settlement tank may be moved by the forklift e.g. loaded onto a vehicle, unloaded from a vehicle, repositioned on site.

In an example embodiment, the settlement tank comprises an access portion (e.g. a panel, a screen, a door, a hatch) arrangeable in use to isolate and/or cover and/or enclose and/or screen an inner region of the settlement tank, for example within the tank, the lamella assembly i.e. the access portion is arrangeable in a closed configuration. In an example embodiment, the access portion may be arrangeable in use to provide access to the settlement tank i.e. the access portion is arrangeable in an open configuration. In this way, access inside the settlement tank may be enabled for maintenance or cleaning, for example. Conversely, access inside the settlement tank may be restricted during normal operation to prevent foreign objects or people entering the settlement tank, for example, thereby minimizing contamination and risk of danger. In an example embodiment, the access portion is arranged to be moveably coupled to the settlement tank whereby the access portion may be moved so as partly or fully isolate and/or cover and/or enclose and/or screen the region of the settlement tank. For example, the access portion may comprise a door coupled to the settlement tank by a pivot e.g. a hinge. In this way, the access portion may be closed so as to in use isolate the settlement tank. Furthermore, the access portion may be opened so as to provide entry to the settlement tank. In an example embodiment, the access portion comprises no openings in, or passageways defined there-through, for example, a plate. In an example embodiment, the access portion comprises one opening therein, or passageway defined there-through, wherein the opening or the passageway is sized so as to function as described above in the closed configuration. In an example embodiment, the access portion comprises a plurality of openings therein, or passageways defined there-through, for example, the access portion comprises a plurality of bars, a grid or weldmesh. In an example embodiment, the settlement tank comprises a plurality of such access portions arranged to cover an upper region of the settlement tank.

In an example embodiment, the settlement tank comprises a levelling member (e.g. a foot, a mount) arrangeable in use to level the settlement tank. In this way, the settlement tank may be arranged such that a bottom wall portion of the tank and/or a lower side of the lamella assembly and/or an upper side of the lamella assembly is parallel to an operating surface of water in the settlement tank. In an example embodiment, the settlement tank comprises a plurality of such levelling members. In an example embodiment, the tank comprises such a levelling member. In an example embodiment, the tank comprises a plurality of such levelling members.

In an example embodiment, the settlement tank comprises a jockey wheel. In an example embodiment, the settlement tank comprises a plurality of jockey wheels. In this way, the settlement tank may be raised by a plurality of jockey wheels, settlement tank may be moved for example positioned or repositioned on site and the settlement tank may be lowered by a plurality of jockey wheels. In an example embodiment, the tank comprises such a jockey wheel. In an example embodiment, the tank comprises a plurality of such jockey wheels.

In an example embodiment, the settlement tank comprises one or more closeable drain outlets. In this way, fluid in the settlement tank may be drained from the settlement tank through a drain outlet, for example, prior to decommissioning, moving and/or maintenance of the settlement tank. In an example embodiment, the tank comprises one or more such drain outlets.

In an example embodiment, the settlement tank comprises a rolling member stay (e.g. a brake, a chock) arrangeable to tend to oppose rolling of the settlement tank on or about a roll member. In this way, rolling of the settlement tank may be prevented, for example, for safety.

In an example embodiment, the settlement tank comprises an interceptor or weir, arranged to intercept, for example, floating matter thereby preventing the floating matter from exiting the outlet.

In this way, maintenance of the settlement tank may be facilitated, thereby maintaining settling efficiency since uneven flow distribution may be minimized while increased back-pressure due to solids accumulation and/or sludge flowing down the inclined lamella may be avoided. Further, even if frequent cleaning of the lamella may be required, operation of the clarifier may be halted for only minimized periods since maintenance may be efficiently completed. In this way, problems due to the sludge becoming gluey and viscous if left for an extended period of time may be avoided. This additionally may avoid anaerobic conditions that may be suitable for microbial or fungal growth, thereby minimizing re-suspension of particles by gas bubble formation and release of dissolved nutrients, and thereby maintaining the effectiveness of the clarifier. Alternatively, solids such as clays, cement or construction residue may harden upon drying, thereby also causing difficulties in removal. Since the settlement tank may be more readily cleaned, problems that may otherwise be exacerbated as a result of, for example, leaving clarifiers to dry during out-of-operation periods or decommissioning prior to movement of standalone clarifiers, especially if there is inadequate cleaning and/or removal of sludge prior, may be avoided. In addition, since the sludge may be collected within the settlement tank, a size of the settlement tank may be reduced compared with traditional collection hoppers or funnels, thereby improving transportation and/or access to sites.

According to a second aspect of the invention, there is provided a method of using a settlement tank comprising a tank and a lamella assembly, wherein the tank and the lamella assembly are arrangeable in:
a first configuration wherein the lamella assembly is arranged inside of the tank; and
a second configuration wherein a part of the lamella assembly is arranged outside of the tank;
wherein the method comprises moving the settlement tank from the first configuration to the second configuration.

### Brief Introduction to the Drawings

For a better understanding of the invention, and to show how embodiments of the same may be carried into effect, reference will now be made, by way of example, to the accompanying diagrammatic drawings in which:
Figure 1 shows a schematic sectional view of a settlement tank according to an example embodiment;
Figure 2 shows a schematic plan view of the settlement tank of Figure 1;
Figure 3 shows a schematic plan view of a lamella plate for the settlement tank of Figure 1;
Figure 4 shows a schematic sectional view of the settlement tank of Figure 1 configured for, for example, maintenance; and
Figure 5 shows a schematic sectional view of the settlement tank of Figure 1 configured for, for example, maintenance.

### Description of Example Embodiments

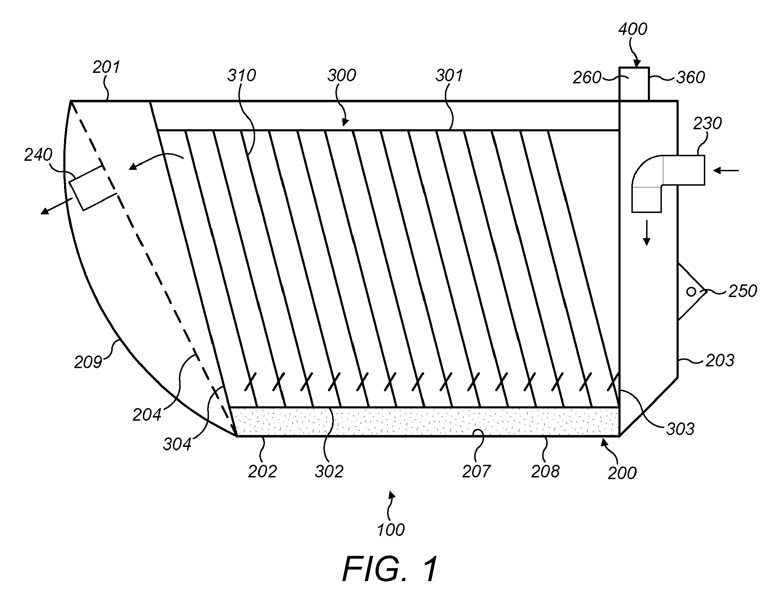

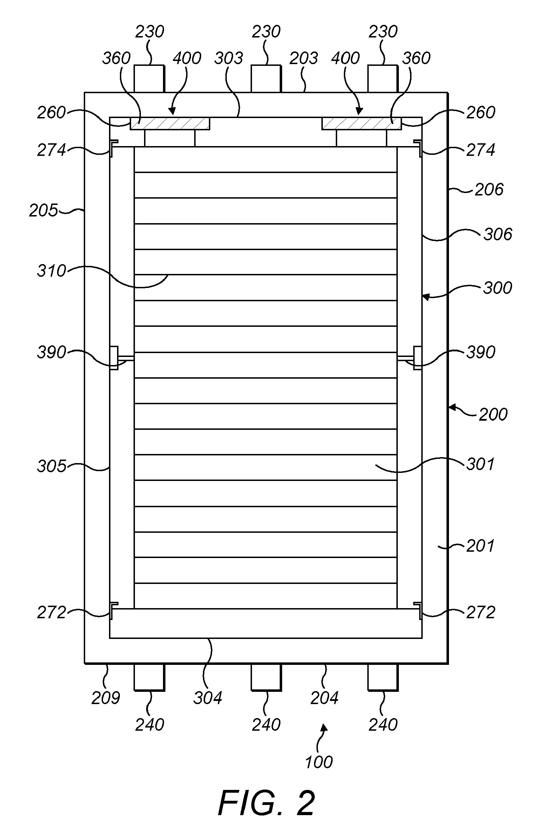

Figures 1 & 2 show a settlement tank 100 according to an example embodiment, in which the settlement tank 100 is arrangeable in what may be conveniently termed an operation configuration (i.e. a first configuration) and in what may be conveniently termed a maintenance configuration (i.e. a second configuration). In this way, maintenance e.g. cleaning of the settlement tank may be facilitated. The settlement tank 100 comprises a tank 200 arranged to receive a lamella assembly 300 within the tank 200. In this example embodiment, the settlement tank 100 further comprises a coupling member 400, arranged couple the tank 200 and the lamella assembly 300.

The tank 200 is an open tank of nominal capacity 6 m³, fully-welded and fabricated from 6 mm fully painted and/or galavanized mild steel plate sides, including a bottom wall portion 202, a rear wall portion 203, a front wall portion 204 and the side wall portions 205 & 206. The opposed side wall portions 205 & 206 are arranged parallel with each other and arranged perpendicular to the bottom wall portion 202 and the rear wall portion 203, which are also perpendicular. The front wall portion 204 is opposed to the rear wall portion 203 and arranged perpendicular to the side wall portions 205 & 206. The front wall portion 204 is arranged at an angle of lamella inclination i.e. the pitch angle e.g. 45° to the bottom wall portion 202, such that an internal length of the tank 200 measured normal to the rear wall portion 203 between the front wall portion 204 and the rear wall portion 203 proximal an upper side of the tank 201 is greater than an internal length of the tank 200 measured normal to the rear wall portion 203 between the front wall portion 204 and the rear wall portion 203 proximal the bottom wall portion 202, notwithstanding that an edge between the rear wall portion 203 and the bottom wall portion 202 comprises a chamfer, so as to tend to reduce stagnation at internal corners of the tank 200. In this way, the tank 200 defines a volume to receive (i.e. hold, contain) for example water, wastewater, sediment, sludge. In use, an operating surface of water in the settlement tank 100 is below the upper side of the tank 201.

An internal surface 207 of the tank 200 is concave, comprising only internal corners and free from obstructions. In this way, turbulence of water in the tank 200 in use is minimized. Further, maintenance, for example cleaning, of the tank 200 is facilitated since, for example, sludge may be poured and/or scooped from the tank 200 while entrapment of sludge is avoided. Reinforcements and/or attachments, for example stiffening members, lifting points, etc., may be arranged on or coupled to e.g. welded or bolted an external surface 208 of the tank 200.

The upper side 201 of the tank 200 is open and free from obstructions. In this way, the lamella assembly 300 may be placed in and/or removed from the tank 200 through the open upper side 201 of the tank 200. The side wall portions 205 & 206 comprise guides 272, 274, arranged to guide the lamella assembly 300 into and out of the tank 100.

The tank 200 comprises two lifting points 250, for example a pair of lifting eyes for crane hooks, arranged e.g. welded on the external surface of the rear wall portion 203, proximal the side wall portions 205 & 206 and approximately equidistant from the bottom wall portion 202 and the upper side of the tank 201. In this way, a rear part of the settlement tank 100 may be lifted and/or lowered by for example a crane, while a front part of the settlement tank 100 may remain on, for example, the ground.

The tank 200 comprises a roll member 209 comprising a pair of convex steel fabrications arranged e.g. integrated with or welded to the external surface 208 of the front wall portion 204 of the tank 200, between the bottom wall portion 202 and the upper side of the tank 201. The roll member 209 extends continuously away from the bottom wall portion 202 beyond the front wall portion 204 and towards the upper side of the tank 201, forming a curved rolling surface. In this way, the settlement tank 100 may be rolled on the roll member 209.

The tank 200 comprises a coupling attachment 260, arranged to receive the coupling member 400. The coupling attachment 260 is arranged proximal to the rear wall portion 203 and comprises 10 mm steel coupled to (e.g. welded or bolted) or integrated with the rear wall portion 203 and/or the side wall portion 205 and/or the side wall portion 206. In this way, the tank 200 and the lamella assembly 300 may be coupled by the coupling member 400. The coupling member 400 is removable, thereby permitting assembly and disassembly of the settlement tank 100 i.e. the lamella assembly 300 may be fully removed from the tank 200 and replaced.

The tank 200 comprises a plurality of inlets 230 that may be releasably coupled to wastewater hoses, the inlets 230 comprising Bauer connections, for example three inlets comprising 2", 4" and/or 6" Bauer connections, arranged through the rear wall portion 203, proximal the open upper side 201 of the tank 200. The inlets 230 are arranged in use above and/or below the operating surface of water in the settlement tank 100. In this way, wastewater may be pumped into the settlement tank 100 through the wastewater hoses. Further, the wastewater hoses may be coupled to and/or uncoupled from the settlement tank 100, for example for commissioning, decommissioning or maintenance. Further, different size wastewater hoses may be coupled to the settlement tank 100 for different flow rates and/or pressures of wastewater and/or to receive wastewater from multiple sources and/or pumps.

The tank 200 comprises a plurality of outlets 240 that may be releasably coupled to cleaned water hoses comprising Bauer connections, for example three outlets comprising 2", 4" and/or 6" Bauer connections, arranged through the front wall portion 204 proximal the open upper side 201 of the tank 200. The outlets 240 are partly or wholly submerged in use below the operating surface of water in the settlement tank 100. In this way, cleaned water may flow out of the settlement tank 100 through the cleaned water hoses. Further, the cleaned water hoses may be coupled to and/or uncoupled from the settlement tank 100, for example for commissioning, decommissioning or maintenance. Further, different size cleaned hoses may be coupled to the settlement tank 100 for different flow rates and/or pressures of cleaned water and/or to discharge cleaned water to multiple reservoirs and/or drains.

The tank 200 comprises four lifting lugs (not shown). In this way, the settlement tank 100 may be, for example, offloaded from a vehicle, moved on site and/or loaded onto a vehicle. The tank 200 may further comprise a pair of forklift pockets (not shown).

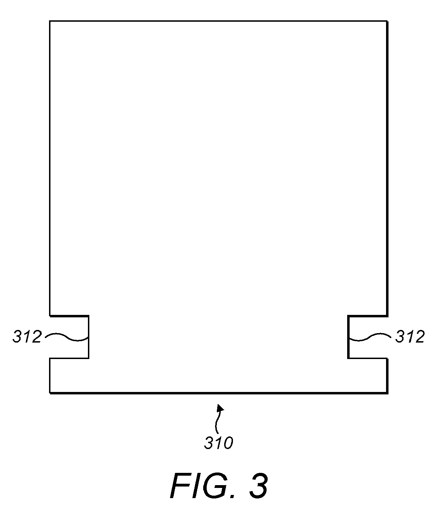

Figure 3 shows a lamella plate 310 for the lamella assembly 300. The lamella plate 310 is a rectangular plate or sheet, having two passageways 312 defined through the lamella plate 310 proximal side edges of the lamella plate 310, relatively closer to a bottom edge of the lamella plate 310 than a top edge of the lamella plate 310. In this way, a flow path through the lamella assembly may be defined by the passageways 312. Typically, the lamella plate 310 comprises steel sheet e.g. 3 mm stainless steel sheet for improved corrosion resistance, reduced weight and reduced friction to promote sediment to slide down the lamella plate 310.

The lamella assembly 300 includes a plurality of lamella plates 310. The lamella assembly 300 comprises an upper side 301, a lower side 302, a rear wall portion 303, a front wall portion 304 and the side wall portions 305 & 306. The opposed side wall portions 305 & 306 are arranged parallel with each other and arranged perpendicular to the bottom wall portion 302 and the rear wall portion 303, which are also perpendicular. The front wall portion 304 is opposed to the rear wall portion 303 and arranged perpendicular to the side wall portions 305 & 306. The front wall portion 304 is arranged at the angle of lamella inclination e.g. 45° to the lower side 302, such that a length of the lamella assembly 300 measured normal to the rear wall portion 303 between the front wall portion 304 and the rear wall portion 303 proximal an upper side 301 of the lamella assembly 300 is greater than a length of the lamella assembly 300 measured normal to the rear wall portion 303 between the front wall portion 304 and the rear wall portion 303 proximal the lower side 302. The front wall portion 304 comprises a lamella plate 310. Further lamella plates 310 are arranged parallel to the front wall portion 304 and are regularly e.g. equally spaced between the front wall portion 304 and the rear wall portion 303. These lamella plates 310 also extend between the side wall portions 305 & 306, to which they are coupled e.g. welded. These lamella plates 310 also extend between the lower side 301 and the upper side 302. A settling region is thus defined by a volume between adjacent lamella plates 310 (and/or between the rear wall portion 303 and an adjacent lamella plate 310), the side wall portions 305 & 306, the lower side 301 and the upper side 302. The lower side 301 of the settling region comprises a passageway there through. Similarly, the upper side 302 of the settling region comprises another passageway there through. In this way, wastewater may in use for example tend to flow so as to enter the lamella assembly through the lower side 301, flow upwards between adjacent lamella plates 310 and exit the lamella assembly through the upper side 302. Alternatively, wastewater may in use for example tend to flow so as to enter the lamella assembly through the upper side 302, flow downwards between adjacent lamella plates 310 and exit the lamella assembly through the lower side 301. During either such direction of flow in use, suspended solids may settle under gravity towards or onto a lamella plate and move down the lamella plate towards the lower side 301.

The lower side 301 and the upper side 302 of the lamella assembly 300 are otherwise open and free from obstructions i.e. comprise only ends of the lamella plates 310 so as to minimize in use turbulence and to facilitate flow of sludge out of the lamella assembly 300.

The front wall portion 304, the rear wall portion 303 and the side wall portions 305 & 306 comprise steel plate e.g. 6 mm painted and/or galavanized mild steel plate or 6 mm stainless steel plate for improved corrosion resistance. Remaining lamella plates 310 comprise steel sheet, as described above. The angle of lamella inclination i.e. pitch angle of the lamella plates 310 is 45°. The lamella plates 310 are spaced equally, having a spacing of 50 mm.

The lamella assembly 300 comprises a coupling attachment 360, arranged to receive the coupling member 400. The coupling attachment 360 is arranged proximal to the rear wall portion 303 and comprises 10 mm steel coupled to (e.g. welded or bolted) or integrated with the rear wall portion 303 and/or the side wall portion 305 and/or the side wall portion 306. In this way, the tank 200 and the lamella assembly 300 may be coupled by the coupling member 400.

The lamella assembly 300 further comprises a lifting point e.g. an eye, a lug, arranged proximal to the front wall portion 304. In this way, a part of the lamella assembly may be lifted and/or lowered.

The tank 200 is arranged to receive the lamella assembly 300 within the tank 200. That is, the tank 200 and/or the lamella assembly 300 are dimensioned such that the lamella assembly 300 may be contained partly or wholly within the tank 200. Further, the upper side 201 of the tank 200 is open and free from obstructions such that the lamella assembly 300 may be placed in and/or removed from the tank 200 through the open upper side 201 of the tank 200 and such that the part of the lamella assembly 300 is arrangeable outside of the tank 200 through the open upper side 201 of the tank 200. In use, the front wall portion 304 and the side wall portions 305 & 306 of the lamella assembly 300 are arranged within the tank 200 proximal to and parallel with the front wall portion 204 and the side wall portions 205 & 206 of the tank 200, respectively. The guides 272, 274 arranged on the side wall portions 205 & 206 of the tank 200 are arranged to guide the side wall portions 305 & 306 of the lamella assembly 300 during movement from the operation configuration and the maintenance configuration and vice versa. The lower side 202 of the lamella assembly 300 is arranged in use within the tank 200 proximal to and parallel with the bottom wall portion 202. The upper side 301 of the lamella assembly 300 is arranged in use within the tank 200 below the operating surface of water in the settlement tank 100. In this way, the lamella plates 310 of the lamella assembly 300 are wholly submerged in use below the operating surface of water in the settlement tank 100.

The coupling member 400 is arranged to couple the tank 200 and the lamella assembly 300 by coupling the coupling attachment 260 of the tank 200 and the coupling attachment 360 of the lamella assembly 300. Coupling member 400 comprises a hinge pin through the coupling attachment 260 of the tank 200 and the coupling attachment 360 of the lamella assembly 300, parallel to the rear wall portion 203 of the tank 200 and/or the rear wall portion 303 of the lamella assembly 300. In this way, the tank 200 and the lamella assembly 300 may be coupled by the coupling member 400 while permitting relative rotation of the tank 200 and the lamella assembly 300 about the coupling member 400. In that way, for example, the lamella assembly 300 may be rotated about that coupling member 400 relative to the tank 200 such that the part of the lamella assembly 300 is arrangeable outside the tank 200 in the maintenance configuration and arrangeable inside the tank 200 in the operation configuration.

In use, the settlement tank 100 is, for example, transported to site and offloaded by a forklift onto ground and the settlement tank 100 levelled, if required, by adjusting one or more feet. In this horizontal position, the settlement tank 100 is arranged in the operation configuration (i.e. the first configuration), suitable for clarifying wastewater, as shown in Figure 1. Wastewater hoses from a pump are coupled to the inlets 230 of the tank 200. Cleaned water hoses to a reservoir are coupled to the outlets 240 of the tank 200. Wastewater is pumped into the settlement tank 100. The wastewater flows through the inlets 230 of the tank towards the lamella assembly 300. The wastewater is received in the lamella assembly 300 between the rear wall portion 303 and an opposing lamella plate 310, where the wastewater is stilled. The wastewater is directed to flow so as to tend to enter between the lamella plates 310 of the lamella assembly 300 through the lower side 302, flow upwards between adjacent lamella plates 310 and exit the lamella assembly 300 through the upper side 301 of the lamella assembly 300. Cleaned water tends to flow under a weir or interceptor (not shown) and through the outlets 240 into the cleaned water hoses. Floating matter e.g. oil is trapped by the weir. Suspended solids in the wastewater settle under gravity towards or onto the lamella plates 310 and move down the lamella plate towards the lower side 301 of the lamella assembly 300. Sludge formed by settled solids accumulates on the lamella plates and/or flows through the lower side 301 of the lamellas assembly 300 and accumulates in the tank 200 on the bottom wall portion 202 of the tank. The accumulating sludge tends to obstruct wastewater flow through the lamella assembly e.g. through the lamella plates 310 and/or lower side of the lamella assembly 300, increasing a back pressure on the wastewater pumped into the settlement tank 100. Hence, the accumulated sludge must be removed.

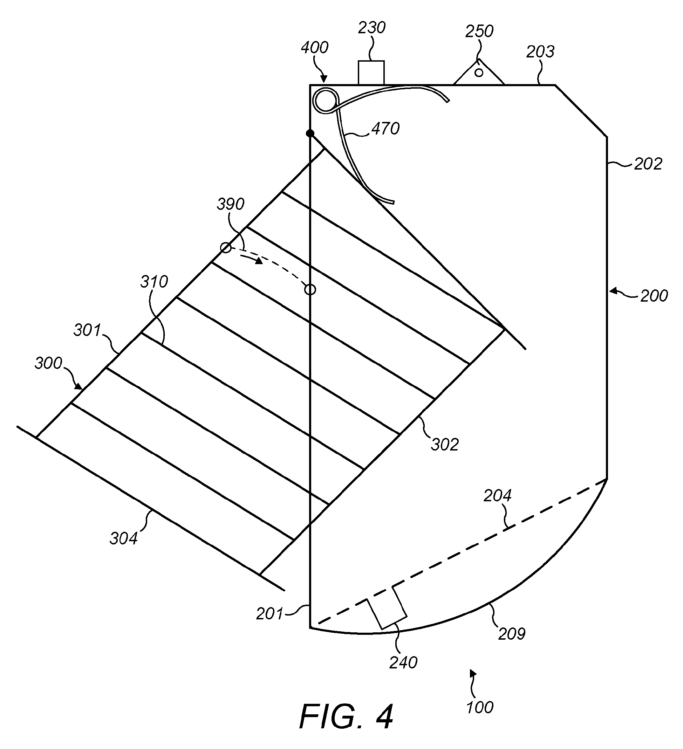

To remove the sludge from the settlement tank 100, the settlement tank 100 may be arranged in the maintenance configuration (i.e. the second configuration), as shown in Figure 4. Operation of the settlement tank 100 is paused i.e. pumping of wastewater into the settlement tank 100 is stopped. The wastewater hoses are uncoupled from the inlets 230 of the tank 200 and the cleaned water hoses are uncoupled from the outlets 240 of the tank 200. Crane hooks are coupled to the lifting points 250 and the settlement tank 100 is lifted into a maintenance configuration. As the settlement tank 100 is initially lifted, the settlement tank 100 tends to roll on the roll member 209. The roll member 209 protects the outlets 240 of the tank 200 from damage during rolling e.g. deformation. As the settlement tank 100 is lifted further, the tank 200 continues to tend to roll on the roll member 209 while the lamella assembly 300 tends to additionally rotate relative to the tank 200 about the coupling member 400 due to gravity and/or the biasing member 470, thereby tending to arrange the part of the lamella assembly 300, that was previously within the tank 200, outside of the tank 200. The outlets 240 of the tank 200 may be isolated from damage during rolling by the roll member 209. Particularly, a centre of gravity of the lamella assembly 300 may tend to be positioned relative to the coupling member 400 rather than relative to rolling on the roll member 209. In this way, accumulated sludge in the tank 200 may tend to flow down the inside surface 207 of the bottom wall portion 202 of the tank 200 and/or down the inside surface 207 of the front wall portion 204 of the tank 200. Furthermore, since the lamella assembly 300 is moved relatively away from the inside surface 207 of the bottom wall portion 202 of the tank 200 and/or the inside surface 207 of the front wall portion 204 of the tank 200, access to these surfaces is facilitated for removal of the sludge. For example, this sludge may be shovelled out. In addition, access between the lamella plates 310 may be facilitated for, for example, cleaning in this maintenance configuration. For safety so as to prevent accidental movement of the settlement tank 100 in this maintenance configuration, the stay 390 may be locked between the tank 200 and the lamella assembly 300 and/or the rolling member stay 290 may be locked on the roll member 209.

Continued lifting of the settlement tank 100 may lift the settlement tank 100 off the ground i.e. lift the roll member 209 off the ground.

The settlement tank 100 may be alternately partly lowered and lifted during lifting to the maintenance configuration such that resultant oscillations and/or vibrations induced may tend to promote flow of sludge. Alternatively and/or additionally, a vibrating poker may be coupled to the settlement tank 100 to achieve a similar effect.

The lamella assembly 300 may be alternately lowered and lifted prior to lifting to the settlement tank 100 into the maintenance configuration such that resultant oscillations and/or vibrations induced may tend to promote flow of sludge out of the lamella assembly 300 into the tank 200. Particularly, the lamella assembly 300 may be lifted by a lifting point of the lamella assembly 300, arranged proximal the front wall portion 304 of the lamella assembly 300, such that the lamella assembly 300 tends to rotate relative to the tank 200, that remains unlifted, about the coupling member 400. In this way, the effective pitch angle of the lamella plates 310 tends to increase, thereby tending to urge sludge down the lamella plates 310 under gravity. Alternatively and/or additionally, a vibrating poker may be coupled to the lamella assembly 300 to achieve a similar effect.

The settlement tank 100 may be arranged again in the operation configuration. The stay 390 is released between the tank 200 and the lamella assembly 300 and the rolling member stay 290 is released from the roll member 209. As the settlement tank 100 is initially lowered back down from the maintenance configuration, the tank 200 tends to roll on the roll member 209 while the lamella assembly 300 tends to additionally rotate relative to the tank 200 about the coupling member 400 due to gravity and/or the biasing member 470, thereby tending to arrange the part of the lamella assembly 300, that was previously outside the tank 200, inside of the tank 200. As the settlement tank 100 is lowered further, settlement tank 100 tends to roll down on the roll member 209 until the settlement tank 100 is again in the operation configuration. Wastewater hoses from the pump are recoupled to the inlets 230 of the tank 200 and cleaned water hoses to the reservoir are recoupled to the outlets 240 of the tank 200. Wastewater is pumped into the settlement tank 100 and operation of the settlement tank 100 is resumed.

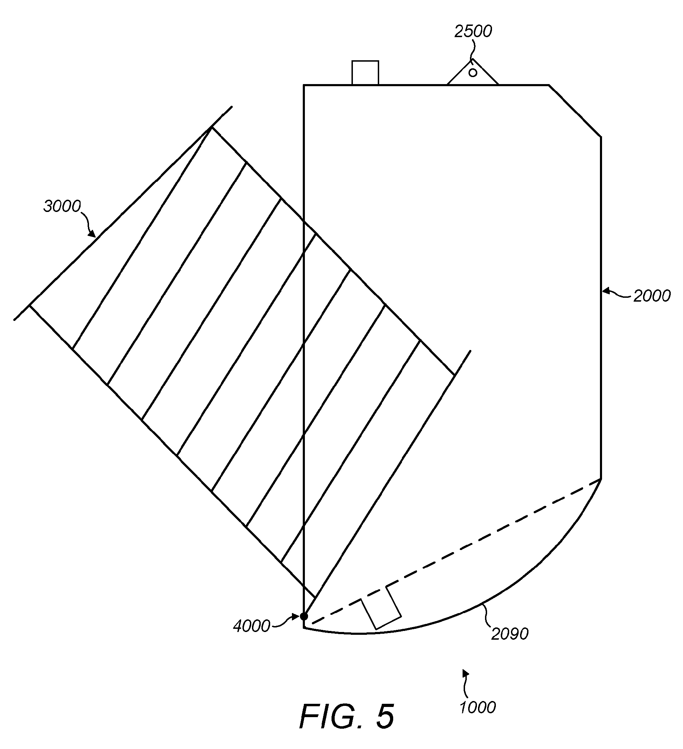

Figure 5 shows another example embodiment of a settlement tank 1000, arranged in another maintenance configuration. In Figure 5, like numerals reference like features as shown in Figures 1 - 4 and as described above. Particularly, a tank 2000 and a lamella assembly 3000 are coupled proximal a roll member 2090 of the tank 2000. In this way, rolling the settlement tank 1000 as described above tends to vary an arrangement of the lamella assembly 3000 in the tank 2000. As the settlement tank 100 is lifted by a lifting member 2500, the tank 2000 tends to roll on the roll member 2090 while the lamella assembly 3000 tends to additionally rotate relative to the tank 2000 about the coupling member 4000 due to gravity and/or the biasing member 4700 (not shown), thereby tending to arrange a part of the lamella assembly 3000, that was within the tank 2000 during an operation configuration, outside of the tank 2000.

In the example embodiments of Figures 1 - 5, the tank 200 has a nominal capacity of 6 m³, but it is to be understood that this is for illustration only. Other example embodiments may be provided to comprise the tank 200 of different dimensions, for example, of nominal capacity of 4 m³, 8 m³, 10 m³, 12 m³ or more.

In the example embodiments of Figures 1 - 5, the lamella assembly 300 comprises a plurality of lamella plates 310 wherein the pitch angle of lamella inclination i.e. angle of inclination of the lamella plates 310 is 45° and the lamella plates 310 are spaced equally, having a spacing of 50 mm, but it is to be understood that this is for illustration only. Other example embodiments may be provided to comprise the lamella assembly 300 the pitch angle of lamella inclination is in a range 30° to 70°, the lamella plates 310 are spaced unequally and/or the lamella plates 310 have a spacing of 20 - 200 mm.

In the example embodiments of Figures 1 - 5, the tank 200 comprises galvanized steel but it is to be understood that this is for illustration only. Other example embodiments may be provided to comprise a tank 200 of different materials, for example, stainless steel, aluminium, painted mild steel, plastic, GRP.

In the example embodiments of Figures 1 - 5, the tank 200 comprises a plurality of inlets 230. In another embodiment, the lamella assembly may comprise a plurality of inlets 330 (not shown) that may be releasably coupled to the inlets 230 of the tank 200, arranged through the rear wall portion 303, proximal the upper side 301 of the lamella assembly 300. The inlets 330 of the lamella assembly 300 may be arranged to receive the inlets 230 of the tank 200. Alternatively and/or additionally, the inlets 230 of the tank 200 may be arranged to receive the inlets 330 of the lamella assembly 300. For example, the inlets 330 of the lamella assembly 300 may comprise a part of a mating fluid coupling e.g. a cup and the inlets 230 of the tank 200 may comprise another part of the mating fluid coupling e.g. a ball or vice versa. The inlets 330 are arranged in use above and/or below the operating surface of water in the settlement tank 100. In this way, wastewater may be pumped into the lamella assembly 300 through the wastewater hoses coupled to the inlets 230 of the tank 200. Further, the inlets 330 of the lamella assembly 300 may be automatically coupled to and/or uncoupled from the inlets 230 of the tank 200, for example, when the part of the lamella assembly 300 is arranged outside of the tank 200 in the maintenance configuration.

In the example embodiments of Figures 1 - 5, the tank 200 comprises a plurality of outlets 240. In another embodiment, the lamella assembly 300 may comprise a plurality of outlets 340 (not shown) that may be releasably coupled to the outlets 240 of the tank 200, for example three outlets comprising 2", 4" and/or 6" orifices or pipes, arranged through the front wall portion 304 proximal the open upper side 301 of the lamella assembly 300. The outlets 340 of the lamella assembly 300 may be arranged to receive the outlets 240 of the tank 200. Alternatively and/or additionally, the outlets 240 of the tank 200 may be arranged to receive the outlets 340 of the lamella assembly 300. For example, the outlets 340 of the lamella assembly 300 may comprise a part of a mating fluid coupling e.g. a cup and the outlets 240 of the tank 200 may comprise another part of the mating fluid coupling e.g. a ball or vice versa. The outlets 340 are partly or wholly submerged in use below the operating surface of water in the settlement tank 100. In this way, cleaned water may flow out of the lamella assembly 300 through the outlets 340 and hence through the cleaned water pipes coupled to the outlets 240 of the tank 200. Further, the outlets 340 of the lamella assembly 300 may be coupled to and/or uncoupled from the outlets 240 of the tank 200, for example for commissioning, decommissioning or maintenance. Further, the outlets 340 of the lamella assembly 300 may be automatically coupled to and/or uncoupled from the outlets 240 of the tank 200, for example, when the part of the lamella assembly 300 is arranged outside of the tank 200 in the maintenance configuration.

Hence, during movement from the operation configuration to the maintenance configuration, the outlets 340 of the lamella assembly 300 tend to uncouple from the outlets 240 of the tank 200 while the inlets 330 of the lamella assembly 300 tend to uncouple from the inlets 230 of the tank 200.

Hence, during movement from the maintenance configuration to the operation configuration, the outlets 340 of the lamella assembly 300 tend to recouple with the outlets 240 of the tank 200 while the inlets 330 of the lamella assembly 300 tend to recouple with the inlets 230 of the tank 200.

As set out above, a settlement tank according to the example embodiments provides a means of clarifying wastewater while facilitating cleaning of the settlement tank. Particularly, maintenance of the settlement tank may be facilitated, thereby maintaining settling efficiency since uneven flow distribution may be minimized while increased back-pressure due to solids accumulation and/or sludge flowing down the inclined lamella may be avoided. Further, even if frequent cleaning of the lamella may be required, operation of the clarifier may be halted for only minimized periods since maintenance may be efficiently completed. In this way, problems due to the sludge becoming gluey and viscous if left for an extended period of time may be avoided. This additionally may avoid anaerobic conditions that may be suitable for microbial or fungal growth, thereby minimizing re-suspension of particles by gas bubble formation and release of dissolved nutrients, and thereby maintaining the effectiveness of the clarifier. Alternatively, solids such as clays, cement or construction residue may harden upon drying, thereby also causing difficulties in removal. Since the settlement tank may be more readily cleaned, problems that may otherwise be exacerbated as a result of, for example, leaving clarifiers to dry during out-of-operation periods or decommissioning prior to movement of standalone clarifiers, especially if there is inadequate cleaning and/or removal of sludge prior, may be avoided. In addition, since the sludge may be collected within the settlement tank, a size of the settlement tank may be reduced compared with traditional collection hoppers or funnels, thereby improving transportation and/or access to sites.

Although a few preferred embodiments have been shown and described, it will be appreciated by those skilled in the art that various changes and modifications might be made without departing from the scope of the invention, as defined in any appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A settlement tank (100) comprising a tank (200) and a lamella assembly (300), wherein the tank (200) and the lamella assembly (300) are arrangeable in:
a first configuration wherein the lamella assembly (300) is arranged inside of the tank (200); and
a second configuration wherein a part of the lamella assembly (300) is arranged outside of the tank (200);
wherein the settlement tank (100) comprises a coupling member (400), wherein the tank (200) and the lamella assembly (300) are arranged to be coupled by the coupling member (400) and wherein the tank (200) and the lamella assembly (300) are arranged to move from the first configuration to the second configuration according to a movement defined by the coupling member (400);
wherein the coupling member (400) comprises a pivot whereby the movement from the first configuration to the second configuration comprises a rotation; and
wherein the tank (200) comprises a roll member (209) arranged whereby the tank (200) is arranged to roll on or about the roll member (209) from the first configuration to the second configuration.

2. A settlement tank (100) according to claim 1, wherein a rotational axis of the roll member (209) is parallel to a rotational axis of the coupling member (400).

3. A settlement tank (100) according to any preceding claim, wherein the tank (200) or the lamella assembly (300) comprises a lifting point.

4. A settlement tank (100) according to any preceding claim, wherein the settlement tank (100) comprises a biasing member (470) arranged to bias the tank (200) and the lamella assembly (300) towards the first configuration or the second configuration.

5. A settlement tank (100) according to any preceding claim, wherein the settlement tank (100) comprises a staying member arrangeable to restrict a movement of the tank (200) and the lamella assembly (300) from the second configuration to the first configuration.

6. The settlement tank (100) according to any preceding claim, wherein the settlement tank (100) comprises a levelling member arrangeable to level the settlement tank (100).

7. A settlement tank (100) according to any preceding claim, wherein the lamella assembly (300) comprises a plurality of plates or tubes.

8. A settlement tank (100) according to any preceding claim, wherein the tank (200) comprises a concave internal surface.

9. A settlement tank (100) according to any preceding claim, wherein the tank (200) comprises a plurality of inlets or outlets.

10. A settlement tank (100) according to any preceding claim, wherein the tank (200) comprises an interceptor.

11. A settlement tank (100) according to any preceding claim, wherein an angle of inclination of the lamella assembly (300) is adjustable.

12. A settlement tank (100) according to any of claims 3 to 11, wherein, the lifting point is arranged proximal an end of the settlement tank and the roll member is arranged proximal an opposed end of the settlement tank.

13. A settlement tank (100) according to any preceding claim, wherein a wall portion of the lamella assembly is arrangeable in use within the tank proximal to and parallel with a wall portion of the tank.

14. A settlement tank (100) according to any preceding claim, wherein the settlement tank comprises an access portion.

15. A method of using a settlement tank (100) comprising a tank (200) and a lamella assembly (300), wherein the tank (200) and the lamella assembly (300) are arrangeable in:
a first configuration wherein the lamella assembly (300) is arranged inside of the tank (200); and
a second configuration wherein a part of the lamella assembly (300) is arranged outside of the tank (200);
wherein the method comprises moving the tank and the lamella assembly from the first configuration to the second configuration.
